# EUROPÄISCHE PATENTSCHRIFT

(11) **EP 2 537 235 B1**
(45) Veröffentlichungstag und Bekanntmachung des Hinweises auf die Patenterteilung: **22.04.2015**
(21) Anmeldenummer: 11702602.1
(22) Anmeldetag: 28.01.2011
(51) Int. Cl.: H02K 7/116, H02K 9/19, H02K 11/04

(54) **ELEKTRISCHE ANTRIEBSEINHEIT**
ELECTRIC DRIVE UNIT
UNITÉ D'ENTRAÎNEMENT ÉLECTRIQUE

(30) Priorität: 11.10.2010 DE 102010048131; 19.02.2010 DE 102010008584
(43) Veröffentlichungstag der Anmeldung: 26.12.2012
(73) Patentinhaber: Magna Powertrain AG & Co. KG, 8502 Lannach (AT)
(72) Erfinder: HOFKIRCHNER, Rainer, A-4300 St. Valentin (AT); PRIX, Daniel, A-9065 Ebental (AT)
(74) Vertreter: Rausch, Gabriele
(86) Internationale Anmeldenummer: PCT/EP2011/051250
(87) Internationale Veröffentlichungsnummer: WO 2011/101222

(56) Entgegenhaltungen:
- EP-A1- 1 077 522
- EP-A1- 1 571 751
- EP-A2- 1 049 234
- WO-A1-2009/113456
- JP-A- 2008 193 863
- US-A1- 2001 004 172
- US-A1- 2004 124 722

## Beschreibung

Die Erfindung betrifft eine elektrische Antriebseinheit, die beispielsweise in einem elektrisch oder hybrid-elektrisch angetriebenen Fahrzeug als Antriebsquelle an einer der Fahrzeugachsen dient. Die Antriebseinheit umfasst eine elektrische Maschine, die einen Stator und einen Rotor aufweist, welcher innerhalb des Stators drehbar ist. Bei der elektrischen Maschine kann es sich beispielsweise um eine Drehstrom-Asynchronmaschine handeln. Die Antriebseinheit umfasst ferner ein Getriebe, das eingangsseitig mit einem Ausgang der elektrischen Maschine gekoppelt ist. Bei dem Getriebe kann es sich beispielsweise um ein Untersetzungsgetriebe und/oder ein Achsdifferentialgetriebe handeln. Weiterhin umfasst die Antriebseinheit eine elektrische Schaltung, bei der es sich beispielsweise um ein Schaltnetzteil für die elektrische Maschine handelt, insbesondere um einen Inverter. Außerdem umfasst die Antriebseinheit ein Gehäuse, das einen Motorraum und einen Getrieberaum bildet, wobei die elektrische Maschine in dem Motorraum angeordnet ist und das Getriebe zumindest teilweise in dem Getrieberaum angeordnet ist.

Bei einer derartigen Antriebseinheit ist ein wirkungsvolles Kühlkonzept erforderlich, um bezüglich der elektrischen Maschine einen hohen Wirkungsgrad zu erzielen und um die elektrische Schaltung vor Überhitzung zu schützen. Ferner muss das Getriebe gekühlt und geschmiert werden.

Aus der EP1049234 A2 ist eine elektrische Antriebseinheit bekannt, die zwei Kühlkreisläufe für den Schmierkreislauf und für den Stator der elektrischen Maschine enthält, wobei ein Wärmetauscher zwischen den Kreisläufen angebracht ist.

Aus der EP 1077522 A1 ist eine Antriebseinheit bekannt, die unterschiedliche Kühl/Schmierkreisläufe enthält.

Es ist eine Aufgabe der Erfindung, eine elektrische Antriebseinheit der vorgenannten Art zu schaffen, bei der die elektrische Maschine und die zugeordnete elektrische Schaltung wirkungsvoll gekühlt und auch das Getriebe hinreichend gekühlt und geschmiert werden, wobei die elektrische Antriebseinheit einen einfachen und kompakten Aufbau besitzen soll.

Diese Aufgabe wird durch eine Antriebseinheit mit den Merkmalen des Anspruchs 1 gelöst, und insbesondere dadurch, dass die Antriebseinheit einen Schmierkreislauf aufweist, in dem eine Schmierflüssigkeit zum Schmieren und Kühlen des Rotors der elektrischen Maschine und des Getriebes geführt ist, wobei die Schmierflüssigkeit zwischen dem Motorraum und dem Getrieberaum zirkuliert, und wobei die Antriebseinheit einen Kühlkreislauf aufweist, in dem eine Kühlflüssigkeit zum Kühlen des Stators der elektrischen Maschine und der elektrischen Schaltung geführt ist, wobei die Kühlflüssigkeit des Kühlkreislaufs in wärmetauschender Verbindung zu der Schmierflüssigkeit des Schmierkreislaufs steht.

Die elektrische Antriebseinheit umfasst somit einen Schmierkreislauf, der zumindest dem Rotor der elektrischen Maschine und einem Teil des Getriebes zugeordnet ist, und einen hiervon unabhängigen Kühlkreislauf, der dem Stator der elektrischen Maschine und der elektrischen Schaltung zugeordnet ist. Durch die getrennte Ausführung der beiden Kreisläufe können für jeden Kreislauf die verwendete Flüssigkeit und deren Temperaturniveau im Betrieb der Antriebseinheit optimal an die jeweilige Schmier- bzw. Kühlfunktion angepasst sein. Gleichwohl können der Rotor der elektrischen Maschine und Komponenten des Getriebes durch die Schmierflüssigkeit eines gemeinsamen Schmierkreislaufs geschmiert und gekühlt werden, wodurch ein einfacher und kompakter Aufbau der elektrischen Antriebseinheit erzielt wird. Da die Schmierflüssigkeit zwischen verschiedenen Bereichen des Gehäuses (Motorraum und Getrieberaum) zirkuliert, kann eine Verschmutzung der elektrischen Maschine durch Metallpartikel verhindert werden, welche möglicherweise durch Abrieb im Getriebe gebildet werden. Indem die beiden Kreisläufe in wärmetauschender Verbindung zueinander stehen, kann die in der Antriebseinheit entstehende Abwärme besonders wirksam abgeführt werden.

Vorteilhafte Ausführungsformen der Erfindung sind nachfolgend und in den abhängigen Ansprüchen genannt.

Der Schmierkreislauf und der Kühlkreislauf besitzen im Betrieb der elektrischen Antriebseinheit vorzugsweise unterschiedliche Temperaturniveaus, wobei infolge der wärmetauschenden Verbindung zueinander die Kühlflüssigkeit des Kühlkreislaufs auch zum Kühlen der Schmierflüssigkeit des Schmierkreislaufs dient. Mit anderen Worten ist für den Kühlkreislauf ein niedrigeres Temperaturniveau vorgesehen als für den Schmierkreislauf, wobei die Kühlflüssigkeit über einen Wärmetauscher der Schmierflüssigkeit Wärme entzieht. Hierdurch können zwei verschiedene Temperaturniveaus stabil eingehalten werden, um die elektrische Maschine mit einem hohen Wirkungsgrad betreiben zu können und die zugeordnete elektrische Schaltung zuverlässig vor Überhitzung zu schützen.

Die Schmierflüssigkeit des Schmierkreislaufs ist vorzugsweise entlang des Rotors der elektrischen Maschine und auch entlang von Komponenten des Getriebes geführt, um den Rotor und die Getriebekomponenten zu schmieren und zu kühlen.

Gemäß einer bevorzugten Ausführungsform sind der Motorraum und der Getrieberaum des Gehäuses durch eine Trennwand voneinander getrennt, wobei die Schmierflüssigkeit durch Öffnungen in der Trennwand zwischen dem Motorraum und dem Getrieberaum zirkuliert, und wobei für die aus dem Getrieberaum in den Motorraum eintretende Schmierflüssigkeit eine Filtereinrichtung vorgesehen ist. Die Filtereinrichtung kann direkt an der Trennwand oder unter Bildung eines Zwischenraums benachbart hierzu angeordnet sein. Durch eine derartige Trennwand mit zugeordneter Filtereinrichtung kann besonders wirksam verhindert werden, dass die elektrische Maschine durch aus dem Getrieberaum stammende Partikel verschmutzt wird. Insbesondere kann hierdurch verhindert werden, dass Metallpartikel aus dem Getrieberaum in den Motorraum gelangen und dort beispielsweise die Isolierung der Statorwicklungen zerstören oder in den Luftspalt der elektrischen Maschine geraten und hierdurch deren Funktionstüchtigkeit beeinträchtigen.

Gemäß einer vorteilhaften Ausführungsform durchquert ein erster Ablaufkanal die genannte Trennwand, durch den die Schmierflüssigkeit aus dem Motorraum in den Getrieberaum strömen kann. Ferner durchquert die Trennwand vorzugsweise ein zweiter Ablaufkanal, durch den die Schmierflüssigkeit in der Gegenrichtung, d.h. aus dem Getrieberaum in den Motorraum strömen kann. In diesem Fall ist die genannte Filtereinrichtung in oder an dem zweiten Ablaufkanal vorgesehen. In dem ersten Ablaufkanal hingegen ist eine Filtereinrichtung nicht zwingend erforderlich.

Um die gewünschte Zirkulation der Schmierflüssigkeit des Schmierkreislaufs zwischen dem Motorraum und dem Getrieberaum zu bewirken, ist in dem Motorraum vorzugsweise eine erste Fördereinrichtung vorgesehen, welche die Schmierflüssigkeit zu Komponenten der elektrischen Maschine (insbesondere zu dem Rotor) und/oder in einer Richtung nach oben fördert. Die durch die erste Fördereinrichtung geförderte Schmierflüssigkeit kann somit gravitationsbedingt in Richtung des Getrieberaums abströmen. Zusätzlich ist in dem Getrieberaum vorzugsweise eine zweite Fördereinrichtung vorgesehen, welche die Schmierflüssigkeit zu Komponenten des Getriebes und/oder in einer Richtung nach oben fördert. Hierdurch kann die mittels der zweiten Fördereinrichtung geförderte Schmierflüssigkeit gravitationsbedingt wieder zurück in den Motorraum abströmen.

Die genannte erste Fördereinrichtung kann insbesondere Förderflügel aufweisen, die mit dem Rotor der elektrischen Maschine drehfest verbunden sind, so dass bei einer Drehbewegung des Rotors die Schmierflüssigkeit mittels der Förderflügel zu den betreffenden Komponenten der elektrischen Maschine und/oder nach oben geschleudert oder gehoben wird. Vorzugsweise sind die Förderflügel durch Schleuderbleche gebildet, die intermittierend in einen Ölsumpf eintauchen.

Die genannte zweite Fördereinrichtung kann insbesondere eine Zahnradpumpe aufweisen, um die Schmierflüssigkeit in dem Getrieberaum zu den Komponenten des Getriebes und/oder nach oben zu pumpen. Die Zahnradpumpe kann zumindest teilweise durch das Getriebe der Antriebseinheit gebildet sein, wodurch der zusätzliche Aufwand zur Bildung der zweiten Fördereinrichtung vorteilhaft gering ist.

Ferner kann in dem Motorraum eine Führungseinrichtung vorgesehen sein, um die zu den Komponenten der elektrischen Maschine geförderte Schmierflüssigkeit in Richtung des Getrieberaums zu führen. Ebenso kann in dem Getrieberaum eine Führungseinrichtung vorgesehen sein, um die zu den Komponenten des Getriebes geförderte Schmierflüssigkeit in Richtung des Motorraum zu führen. Die genannten Führungseinrichtungen können beispielsweise durch Rinnen, Kanäle oder Leitungen gebildet sein, die in dem Gehäuse integral oder separat von dem Gehäuse ausgebildet sind. Auch ein zwischen dem Stator und dem Rotor der elektrischen Maschine gebildeter Ringspalt kann in dem Motorraum als Führungseinrichtung für die Schmierflüssigkeit dienen.

Vorzugsweise umfasst das Gehäuse der Antriebseinheit einen Sumpf für die Schmierflüssigkeit des Schmierkreislaufs, wobei der Sumpf einen Wärmetauscher zur Abgabe von Wärme von der Schmierflüssigkeit an die Kühlflüssigkeit des Kühlkreislaufs bildet. In dem Sumpf wird während des Betriebs der elektrischen Antriebseinheit stets ein Teil der Schmierflüssigkeit gesammelt, nachdem diese den Rotor der elektrischen Maschine und/oder Komponenten des Getriebes geschmiert und gekühlt hat. Somit kann in oder an dem Sumpf des Schmierkreislaufs eine Wärmeabgabe an den Kühlkreislauf besonders wirksam erfolgen.

Insbesondere kann wenigstens eine Leitung des Kühlkreislaufs durch den Sumpf geführt sein, um den erwünschten Wärmeübergang herbeizuführen. Beispielsweise kann eine Leitung des Kühlkreislaufs nach Art einer Kühlschlange durch den Sumpf gelegt sein.

Zusätzlich zu der erläuterten Wärmeabgabe an den Kühlkreis kann die in dem Sumpf gesammelte Schmierflüssigkeit auch Wärme an die Umgebung abgeben, beispielsweise über einen Wandabschnitt des Gehäuses und/oder über Kühlrippen des Gehäuses.

Was die Kühlflüssigkeit des Kühlkreislaufs betrifft, so ist diese vorzugsweise entlang des Stators der elektrischen Maschine oder entlang eines den Stator umgebenden Gehäuseabschnitts geführt, um den Stator zu kühlen. Durch eine flächige Benetzung des Stators bzw. eines den Stator umgebenden Gehäuseabschnitts kann die Wärmeabgabe von dem Stator an die Kühlflüssigkeit besonders wirkungsvoll erfolgen.

Hierzu ist es bevorzugt, wenn der Kühlkreislauf den Motorraum des Gehäuses umfänglich umschließt. Insbesondere kann die Kühlflüssigkeit entlang von Kühlkanälen geführt sein, die entlang einer Mantelfläche verlaufen, die durch den Stator der elektrischen Maschine oder durch einen den Stator umgebenden Gehäuseabschnitt gebildet ist.

Um auch die genannte elektrische Schaltung mittels der Kühlflüssigkeit wirkungsvoll kühlen zu können, ist es bevorzugt, wenn die elektrische Antriebseinheit einen Schaltungsgehäuseabschnitt aufweist, in dem die elektrische Schaltung aufgenommen ist. In diesem Fall ist der Kühlkreislauf auch zu dem Schaltungsgehäuseabschnitt geführt, um die darin befindliche elektrische Schaltung zu kühlen.

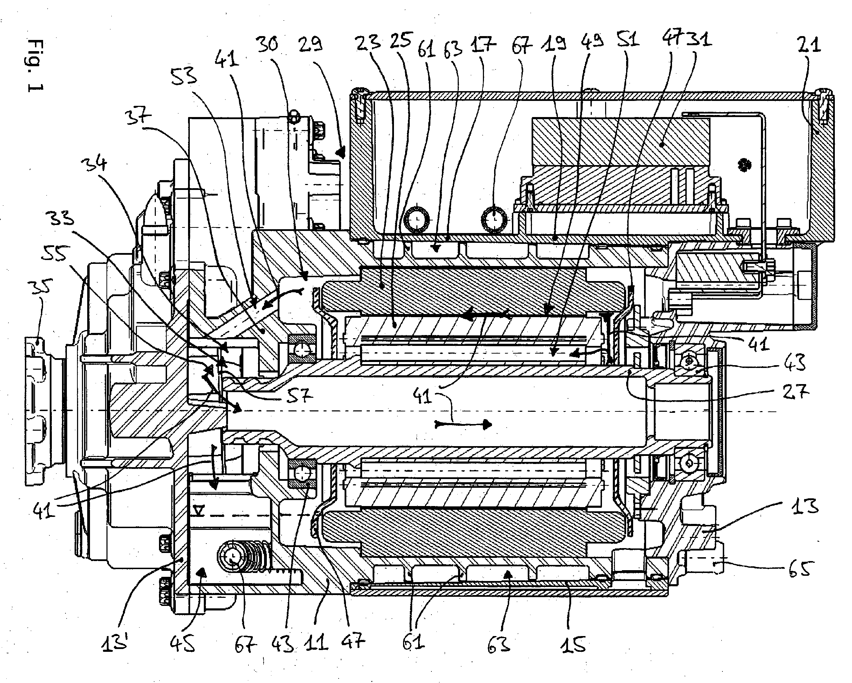

Die Erfindung wird nachfolgend lediglich beispielhaft anhand der Zeichnung näher erläutert. Die einzige Figur zeigt eine Längsschnittansicht einer elektrischen Antriebseinheit.

Die gezeigte elektrische Antriebseinheit umfasst ein Metallgehäuse 11, das an seinen beiden Stirnseiten von einem jeweiligen Gehäusedeckel 13, 13' verschlossen ist. Das Metallgehäuse 11 ist vorzugsweise aus Aluminium gegossen. Die Antriebseinheit besitzt ferner ein Kunststoffgehäuse 15 mit einer zylindrischen Mantelfläche 17, die eine zylindrische Mantelfläche 19 des Metallgehäuses 11 umfänglich umschließt. Das Kunststoffgehäuse 15 besitzt ferner einen an der Oberseite aufgesetzten, quaderförmigen Schaltungsgehäuseabschnitt 21.

Innerhalb der Mantelfläche 19 ist in das Metallgehäuse 11 ein Stator 23 eingesetzt, beispielsweise eingepresst. Innerhalb des Stators 23 ist ein Rotor 25 angeordnet, der mit einer hohlen Ausgangswelle 27 drehfest verbunden ist, welche in dem Metallgehäuse 11 drehbar gelagert ist. Der Stator 23 und der Rotor 25 bilden eine elektrische Maschine 29, insbesondere eine Drehstrom-Asynchronmaschine. Die elektrische Maschine 29 ist in einem Motorraum 30 des Metallgehäuses 11 angeordnet. Der elektrischen Maschine 29 ist eine elektrische Schaltung zugeordnet, die beispielsweise einen Inverter 31 umfasst und innerhalb des Schaltungsgehäuseabschnitts 21 angeordnet ist. Die elektrische Schaltung kann ferner beispielsweise einen DC/DC-Konverter und/oder ein Ladegerät umfassen.

Die gezeigte elektrische Antriebseinheit umfasst ferner ein Stirnradgetriebe 33, das in einem Getrieberaum 34 des Metallgehäuses 11 angeordnet ist. Das Stirnradgetriebe 33 ist eingangsseitig mit der Ausgangswelle 27 der elektrischen Maschine 29 gekoppelt. Das Stirnradgetriebe 33 ist als Untersetzungsgetriebe konfiguriert und ausgangsseitig mit dem Eingang eines (nicht dargestellten) Achsdifferentialgetriebes gekoppelt, welches wiederum zwei Ausgänge besitzt. Jedem dieser beiden Ausgänge ist ein Verbindungsflansch 35 zugeordnet, an dem eine Achswelle befestigt werden kann. Lediglich einer der Verbindungsflansche 35 ist in der gezeigten Schnittansicht ersichtlich. Der Getrieberaum 34 des Metallgehäuses 11 ist von dem Motorraum 30 mittels einer Trennwand 37 getrennt.

Die gezeigte elektrische Antriebseinheit umfasst weiterhin einen geschlossenen Schmierkreislauf, in dem Schmieröl geführt ist, wobei die Fließrichtung des Schmieröls durch Pfeile 41 illustriert ist. Das Schmieröl dient zum Kühlen des Rotors 25 der elektrischen Maschine 29 und auch zum Schmieren des Rotors 25 bzw. der Lager 43 der Ausgangswelle 27. Zusätzlich dient das Schmieröl zum Schmieren und Kühlen der Komponenten des Stirnradgetriebes 33. Hierfür zirkuliert das Schmieröl zwischen dem Motorraum 30 und dem Getrieberaum 34, wie nachfolgend erläutert wird.

Das Schmieröl wird in einem Sumpf 45 des Schmierkreislaufs gesammelt. An der rotierenden Ausgangswelle 27 sind mehrere Schleuderbleche 47 befestigt, die intermittierend in das in dem Sumpf 45 gesammelte Schmieröl eintauchen und dieses nach oben schleudern. Die Schleuderbleche 47 bilden somit eine erste Fördereinrichtung für das Schmieröl. Das nach oben geschleuderte Schmieröl gelangt in den Ringspalt, der zwischen dem Stator 23 und dem Rotor 25 der elektrischen Maschine 29 gebildet ist. Ferner gelangt das Schmieröl in einen Ringraum 51, der zwischen dem Rotor 25 und der Ausgangswelle 27 gebildet ist. Hierdurch wird der Rotor 25 der elektrischen Maschine 29 ständig mit dem Schmieröl benetzt.

Das derartig in dem oberen Bereich des Motorraums 30 geförderte Schmieröl kann über einen ersten Ablaufkanal 53, der die Trennwand 37 durchquert, in den Getrieberaum 34 gelangen. Dort benetzt das Schmieröl die Komponenten des Stirnradgetriebes 33, um diese ebenfalls zu schmieren und zu kühlen. Zusätzlich zu der bestimmungsgemäßen Unterstzungswirkung bildet das Stirnradgetriebe 33 eine Zahnradpumpe, die das Schmieröl neuerlich nach oben befördert, d.h. das Stirnradgetriebe 33 bildet eine zweite Fördereinrichtung für das Schmieröl. Das derartig innerhalb des Getrieberaums 34 nach oben geförderte Schmieröl kann über einen zweiten Ablaufkanal 55, der die Trennwand 37 bezüglich des ersten Ablaufkanals 53 in der Gegenrichtung durchquert, zurück in Richtung des Motorraums 30 abströmen. Hierfür muss das Schmieröl jedoch einen Ölfilter 57 durchströmen, der die im Motorraum 30 befindliche elektrische Maschine 29 vor Verschmutzungspartikeln aus dem Getrieberaum 34 schützt. Bei dem hier gezeigten Ausführungsbeispiel mündet der zweite Ablaufkanal 55 in den Innenraum der hohlen Ausgangswelle 27. Von dort kann das Schmieröl über das offene Ende und durch nicht dargestellte Auslassöffnungen in den Sumpf 45 gelangen.

Zusätzlich zu dem erläuterten Schmierkreislauf umfasst die gezeigte elektrische Antriebseinheit einen offenen Kühlkreislauf, in dem Kühlwasser zirkuliert. Das Kühlwasser dient zum Kühlen des Stators 23 der elektrischen Maschine 29 sowie zum Kühlen des Inverters 31.

Die Kühlung des Stators 23 erfolgt über die Mantelfläche 19 des Metallgehäuses 11. An der Außenseite der Mantelfläche 19 sind mehrere Trennstege 61 gebildet. Durch die Trennstege 61, die Außenseite der Mantelfläche 19 des Metallgehäuses 11 und die Innenseite der Mantelfläche 17 des Kunststoffgehäuses 15 sind mehrere Kühlkanäle 63 gebildet, durch die Kühlwasser entlang der Mantelfläche 19 des Metallgehäuses 11 in Umfangsrichtung fließen kann. Hierdurch wird ein umfänglich geschlossener Kühlwassermantel gebildet, um durch Wärmeleitung entlang des Metallgehäuses 11 den hiermit flächig verbundenen Stator 23 zu kühlen.

Um das erforderliche Kühlwasser den Kühlkanälen 63 zuzuführen bzw. von diesen abzuführen, sind an dem Kunststoffgehäuse 15 mehrere Kühlwasseranschlüsse 65 vorgesehen. Eine Verzweigung des somit gebildeten Kühlkreislaufs führt auch zu dem Schaltungsgehäuseabschnitt 21, um den dort angeordneten Inverter 31 mittels des Kühlwassers zu kühlen.

Der vorstehend erläuterte Schmierkreislauf und der Kühlkreislauf stehen in wärmetauschender Verbindung zueinander. Hierfür ist eine Leitung 67 des Kühlkreislaufs durch den Sumpf 45 des Schmierkreislaufs geführt. Der Sumpf 45 und die Leitung 67 bilden somit einen Wärmetauscher, um Wärme von dem Schmieröl an das Kühlwasser abzugeben.

Somit sind ein Schmierkreislauf und ein Kühlkreislauf mit unterschiedlichen Temperaturniveaus gebildet, so dass die Außenseite des Stators 23 der elektrischen Maschine 29 und der Inverter 31 mittels des Kühlwassers auf einem niedrigeren Temperaturniveau (ca. 80°C) gehalten werden können als die Temperatur des Schmieröls (ca. 130°C). Hierdurch wird für die elektrische Maschine 29 eine erhöhte Leistungsdichte erzielt, und der Inverter 31 wird zuverlässig vor Überhitzung geschützt.

Ein einziger Schmierkreislauf erlaubt es hierbei, die relevanten Komponenten sowohl der elektrischen Maschine 29 als auch des Stirnradgetriebes 33 (und des nicht dargestellten Achsdifferentialgetriebes) zu schmieren und zu kühlen. Hierdurch vereinfacht sich auch die Abdichtung der elektrischen Maschine 29 an der dem Stirnradgetriebe 33 zugewandten Seite. Durch die Verwendung der Schleuderbleche 47 als eine erste Fördereinrichtung und die Verwendung des Stirnradgetriebes 32 als eine zweite Fördereinrichtung (Zahnradpumpe) entfällt für den Schmierkreislauf die Notwendigkeit einer separaten Ölpumpe. Ferner verbessert die Verwendung der Schleuderbleche 47 als Ölfördereinrichtung an der dem Stirnradgetriebe 33 abgewandten Seite die Schmierung des dort befindlichen Lagers 43 der Ausgangswelle 47.

### Bezugszeichenliste

- 11: Metallgehäuse
- 13, 13': Gehäusedeckel
- 15: Kunststoffgehäuse
- 17: Mantelfläche des Kunststoffgehäuses
- 19: Mantelfläche des Metallgehäuses
- 21: Schaltungsgehäuseabschnitt
- 23: Stator
- 25: Rotor
- 27: Ausgangswelle
- 29: elektrische Maschine
- 30: Motorraum
- 31: Inverter
- 33: Stirnradgetriebe
- 34: Getrieberaum
- 35: Verbindungsflansch
- 37: Trennwand
- 41: Fließrichtung des Schmieröls
- 43: Lager der Ausgangswelle
- 45: Sumpf
- 47: Schleuderblech
- 49: Ringspalt
- 51: Ringraum
- 53: erster Ablaufkanal
- 55: zweiter Ablaufkanal
- 57: Ölfilter
- 61: Trennstück
- 63: Kühlkanal
- 65: Kühlwasseranschluss
- 67: Leitung des Kühlkreislaufs

## Patentansprüche

1. Elektrische Antriebseinheit, mit einer einen Stator (23) und einen Rotor (25) aufweisenden elektrischen Maschine (29), einem Getriebe (33), einer elektrischen Schaltung (31) und einem Gehäuse (11), wobei das Gehäuse einen Motorraum (30) bildet, in dem die elektrische Maschine (29) angeordnet ist, und wobei das Gehäuse ferner einen Getrieberaum (34) bildet, in dem zumindest ein Teil des Getriebes (33) angeordnet ist, wobei die Antriebseinheit einen Schmierkreislauf aufweist, in dem eine Schmierflüssigkeit zum Schmieren und Kühlen des Rotors (25) der elektrischen Maschine und des Getriebes (33) geführt ist, wobei die Schmierflüssigkeit zwischen dem Motorraum (30) und dem Getrieberaum (34) zirkuliert, und wobei die Antriebseinheit einen Kühlkreislauf aufweist, in dem eine Kühlflüssigkeit zum Kühlen des Stators (23) der elektrischen Maschine und der elektrischen Schaltung (31) geführt ist, wobei die Kühlflüssigkeit des Kühlkreislaufes in wärmetauschender Verbindung zu der Schmierflüssigkeit des Schmierkreislaufs steht, wobei in dem Motorraum (30) eine erste Fördereinrichtung vorgesehen ist, um die Schmierflüssigkeit zu Komponenten der elektrischen Maschine (29) und/oder nach oben zu fördern, und wobei in dem Getrieberaum (34) eine zweite Fördereinrichtung vorgesehen ist, um die Schmierflüssigkeit zu Komponenten des Getriebes (33) und/oder nach oben zu fördern, **dadurch gekennzeichnet, dass** wobei die erste Fördereinrichtung wenigstens einen Förderflügel (47) aufweist, der mit dem Rotor (25) der elektrischen Maschine (29) drehfest verbunden ist, um bei einer Drehbewegung des Rotors die Schmierflüssigkeit zu den Komponenten der elektrischen Maschine und/oder nach oben zu schleudern oder zu heben.

2. Antriebseinheit nach Anspruch 1, wobei der Schmierkreislauf und der Kühlkreislauf im Betrieb der Antriebseinheit unterschiedliche Temperaturniveaus besitzen, wobei die Kühlflüssigkeit des Kühlkreislaufs auch zum Kühlen der Schmierflüssigkeit des Schmierkreislaufs dient.

3. Antriebseinheit nach Anspruch 1 oder 2, wobei die Schmierflüssigkeit des Schmierkreislaufs entlang des Rotors (25) der elektrischen Maschine (29) und entlang von Komponenten des Getriebes (33) geführt ist.

4. Antriebseinheit nach einem der vorhergehenden Ansprüche, wobei der Motorraum (30) und der Getrieberaum (34) des Gehäuses (11) durch eine Trennwand (37) voneinander getrennt sind, wobei die Schmierflüssigkeit durch Öffnungen in der Trennwand zwischen dem Motorraum und dem Getrieberaum zirkuliert, und wobei für die aus dem Getrieberaum (34) in den Motorraum (30) strömende Schmierflüssigkeit eine Filtereinrichtung (57) vorgesehen ist.

5. Antriebseinheit nach Anspruch 4, wobei wenigstens ein erster Ablaufkanal (53) die Trennwand (37) durchquert, durch den die Schmierflüssigkeit aus dem Motorraum (30) in den Getrieberaum (34) strömen kann, und wobei wenigstens ein zweiter Ablaufkanal (55) die Trennwand (37) durchquert, durch den die Schmierflüssigkeit aus dem Getrieberaum (34) in den Motorraum (30) strömen kann, wobei die Filtereinrichtung (57) in oder an dem zweiten Ablaufkanal (55) vorgesehen ist.

6. Antriebseinheit nach Anspruch 1, wobei die zweite Fördereinrichtung eine Zahnradpumpe aufweist, um die Schmierflüssigkeit zu den Komponenten des Getriebes (33) und/oder nach oben zu pumpen, wobei die Zahnradpumpe zumindest teilweise durch das Getriebe der Antriebseinheit gebildet ist.

7. Antriebseinheit nach einem der Ansprüche 1 bis 6, wobei in dem Motorraum (30) wenigstens eine Führungseinrichtung vorgesehen ist, um die Schmierflüssigkeit von den Komponenten der elektrischen Maschine (29) in Richtung des Getrieberaums (34) zu führen, und wobei in dem Getrieberaum (34) wenigstens eine Führungseinrichtung vorgesehen ist, um die Schmierflüssigkeit von den Komponenten des Getriebes (33) in Richtung des Motorraums (30) zu führen.

8. Antriebseinheit nach einem der vorhergehenden Ansprüche, wobei das Gehäuse (11) einen Sumpf (45) für die Schmierflüssigkeit aufweist, wobei der Sumpf einen Wärmetauscher zur Abgabe von Wärme von der Schmierflüssigkeit des Schmierkreislaufs an die Kühlflüssigkeit des Kühlkreislaufs bildet.

9. Antriebseinheit nach Anspruch 8, wobei wenigstens eine Leitung (67) des Kühlkreislaufs durch den Sumpf (45) geführt ist.

10. Antriebseinheit nach einem der vorhergehenden Ansprüche, wobei die Kühlflüssigkeit des Kühlkreislaufs entlang des Stators (23) der elektrischen Maschine (29) oder entlang eines den Stator umgebenden Gehäuseabschnitts (19) geführt ist.

11. Antriebseinheit nach einem der vorhergehenden Ansprüche, wobei der Kühlkreislauf den Motorraum (30) des Gehäuses (11) umfänglich umschließt.

12. Antriebseinheit nach einem der vorhergehenden Ansprüche, wobei die Antriebseinheit einen Schaltungsgehäuseabschnitt (21) aufweist, in dem die elektrische Schaltung (31) aufgenommen ist, wobei der Kühlkreislauf zu dem Schaltungsgehäuseabschnitt geführt ist, um die elektrische Schaltung zu kühlen.

## Claims

1. Electric drive unit having an electric motor (29), which comprises a stator (23) and a rotor (25), a gearbox (33), an electric circuit (31) and a housing (11), wherein the housing forms a motor compartment (30) in which is arranged the electric motor (29) and wherein the housing in addition forms a gearbox chamber (34) in which at least a part of the gearbox (33) is arranged, wherein the drive unit comprises a lubricating circuit in which a lubricating fluid is conveyed in order to lubricate and to cool the rotor (25) of the electric motor and the gearbox (33), wherein the lubricating fluid circulates between the motor compartment (30) and the gearbox chamber (34), and wherein the drive unit comprises a cooling circuit in which a cooling fluid is conveyed in order to cool the stator (23) of the electric motor and to cool the electric circuit (31), wherein the cooling fluid of the cooling circuit is connected to the lubricating fluid of the lubricating circuit in such a manner as to be able to exchange heat, wherein a first delivery device is provided in the motor compartment (30) in order to convey the lubricating fluid to components of the electric motor (29) and/or in an upward direction, and wherein a second delivery device is provided in the gearbox chamber (34) in order to convey the lubricating fluid to components of the gearbox (33) and/or in an upward direction, **characterized in that** the first delivery device comprises at least one delivery vane (47) that is connected in a torque proof manner to the rotor (25) of the electric motor (29) in order, during the rotational movement of the rotor, to propel the lubricating fluid towards the components of the electric motor and/or in an upward direction or to raise up said lubricating fluid.

2. Drive unit according to Claim 1, wherein the lubricating circuit and the cooling circuit have different temperature levels during the operation of the drive unit, wherein the cooling fluid of the cooling circuit is also used to cool the lubricating fluid of the lubricating circuit.

3. Drive unit according to Claim 1 or 2, wherein the lubricating fluid of the lubricating circuit is conveyed along the rotor (25) of the electric motor (29) and along components of the gearbox (33).

4. Drive unit according to any one of the preceding claims, wherein the motor compartment (30) and the gearbox chamber (34) of the housing (11) are mutually separated by a separating wall (37), wherein the lubricating fluid circulates through openings in the separating wall between the motor compartment and the gearbox chamber, and wherein a filter device (57) is provided for the lubricating fluid that flows from the gearbox chamber (34) into the motor compartment (30).

5. Drive unit according to Claim 4, wherein at least a first discharge channel (53) passes through the separating wall (37), through which first discharge channel the lubricating fluid can flow from the motor compartment (30) into the gearbox chamber (34), and wherein at least a second discharge channel (55) passes through the separating wall (37), through which second discharge channel the lubricating fluid can flow from the gearbox chamber (34) into the motor compartment (30), wherein the filter device (57) is provided in or on the second discharge channel (55).

6. Drive unit according to Claim 1, wherein the second delivery device comprises a toothed wheel pump in order to pump the lubricating fluid to the components of the gearbox (33) and/or in an upward direction, wherein the toothed wheel pump is embodied at least partially by the gearbox of the drive unit.

7. Drive unit according to any one of Claims 1 to 6, wherein at least one conveying device is provided in the motor compartment (30) in order to convey the lubricating fluid from the components of the electric motor (29) in the direction of the gearbox chamber (34) and wherein at least one conveying device is provided in the gearbox chamber (34) in order to convey the lubricating fluid from the components of the gearbox (33) in the direction of the motor compartment (30).

8. Drive unit according to any one of the preceding claims, wherein the housing (11) comprises a sump (45) for the lubricating fluid, wherein the sump forms a heat exchanger for discharging heat from the lubricating fluid of the lubricating circuit to the cooling fluid of the cooling circuit.

9. Drive unit according to Claim 8, wherein at least one pipe (67) of the cooling circuit is routed through the sump (45).

10. Drive unit according to any one of the preceding claims, wherein the cooling fluid of the cooling circuit is conveyed along the stator (23) of the electric motor (29) or along a housing section (19) that encompasses the stator.

11. Drive unit according to any one of the preceding claims, wherein the cooling circuit peripherally encompasses the motor compartment (30) of the housing (11).

12. Drive unit according to any one of the preceding claims, wherein the drive unit comprises a switching housing section (21) that receives the electric circuit (31), wherein the cooling circuit is routed to the switching housing section in order to cool the electric circuit.

## Revendications

1. Unité d'entraînement électrique, avec une machine électrique (29) présentant un stator (23) et un rotor (25), avec un engrenage (33), avec un circuit électrique (31) et un boîtier (11), dans laquelle le boîtier forme une chambre de moteur (30) dans laquelle la machine électrique (29) est installée, et dans laquelle le boîtier forme en outre une chambre d'engrenage (34) dans laquelle au moins une partie de l'engrenage (33) est installée, dans laquelle l'unité d'entraînement présente un circuit de lubrification, dans lequel un liquide de lubrification est conduit pour lubrifier et refroidir le rotor (25) de la machine électrique et l'engrenage (33), dans laquelle le liquide de lubrification circule entre la chambre de moteur (30) et la chambre d'engrenage (34), et dans laquelle l'unité d'entraînement présente un circuit de refroidissement, dans lequel un liquide de refroidissement est conduit pour refroidir le stator (23) de la machine électrique et le circuit électrique (31), dans laquelle le liquide de refroidissement du circuit de refroidissement est en liaison d'échange de chaleur avec le liquide de lubrification du circuit de lubrification, dans laquelle il est prévu dans la chambre de moteur (30) un premier dispositif de transport pour transporter le liquide de lubrification vers des composants de la machine électrique (29) et/ou vers le haut, et dans laquelle il est prévu dans la chambre d'engrenage (34) un deuxième dispositif de transport pour transporter le liquide de lubrification vers des composants de l'engrenage (33) et/ou vers le haut, **caractérisée en ce que** le premier dispositif de transport présente au moins une ailette de transport (47), qui est calée en rotation avec le rotor (25) de la machine électrique (29), afin de centrifuger ou de faire monter le liquide de lubrification vers les composants de la machine électrique et/ou vers le haut lors d'un mouvement de rotation du rotor.

2. Unité d'entraînement selon la revendication 1, dans laquelle le circuit de lubrification et le circuit de refroidissement présentent des niveaux de température différents pendant le fonctionnement de l'unité d'entraînement, le liquide de refroidissement du circuit de refroidissement servant aussi pour le refroidissement du liquide de lubrification du circuit de lubrification.

3. Unité d'entraînement selon la revendication 1 ou 2, dans laquelle le liquide de lubrification du circuit de lubrification est conduit le long du rotor (25) de la machine électrique (29) et le long de composants de l'engrenage (33).

4. Unité d'entraînement selon l'une quelconque des revendications précédentes, dans laquelle la chambre de moteur (30) et la chambre d'engrenage (34) du boîtier (11) sont séparées l'une de l'autre par une paroi de séparation (37), dans laquelle le liquide de lubrification circule à travers des ouvertures dans la paroi de séparation entre la chambre de moteur et la chambre d'engrenage, et dans laquelle il est prévu un dispositif de filtrage (57) pour le liquide de lubrification s'écoulant de la chambre d'engrenage (34) à la chambre de moteur (30).

5. Unité d'entraînement selon la revendication 4, dans laquelle au moins un premier canal d'évacuation (53) traverse la paroi de séparation (37), par lequel le liquide de lubrification peut s'écouler de la chambre de moteur (30) à la chambre d'engrenage (34), et dans laquelle au moins un deuxième canal d'évacuation (55) traverse la paroi de séparation (37), par lequel le liquide de lubrification peut s'écouler de la chambre d'engrenage (34) à la chambre de moteur (30), dans laquelle le dispositif de filtrage (57) est prévu dans ou au deuxième canal d'évacuation (55).

6. Unité d'entraînement selon la revendication 1, dans laquelle le deuxième dispositif de transport présente une pompe à engrenage, pour pomper le liquide de lubrification vers les composants de l'engrenage (33) et/ou vers le haut, dans laquelle la pompe à engrenage est formée au moins en partie par l'engrenage de l'unité d'entraînement.

7. Unité d'entraînement selon l'une quelconque des revendications 1 à 6, dans laquelle il est prévu dans la chambre de moteur (30) au moins un dispositif de guidage pour guider le liquide de lubrification depuis les composants de la machine électrique (29) en direction de la chambre d'engrenage (34), et dans laquelle il est prévu dans la chambre d'engrenage (34) au moins un dispositif de guidage pour guider le liquide de lubrification depuis les composants de l'engrenage (33) en direction de la chambre de moteur (30).

8. Unité d'entraînement selon l'une quelconque des revendications précédentes, dans laquelle le boîtier (11) présente un carter inférieur (45) pour le liquide de lubrification, dans laquelle le carter inférieur forme un échangeur de chaleur pour la cession de chaleur du liquide de lubrification du circuit de lubrification au liquide de refroidissement du circuit de refroidissement.

9. Unité d'entraînement selon la revendication 8, dans laquelle au moins une conduite (67) du circuit de refroidissement est menée à travers le carter inférieur (45).

10. Unité d'entraînement selon l'une quelconque des revendications précédentes, dans laquelle le liquide de refroidissement du circuit de refroidissement est conduit le long du stator (23) de la machine électrique (29) ou le long d'une partie de boîtier (19) enveloppant le stator.

11. Unité d'entraînement selon l'une quelconque des revendications précédentes, dans laquelle le circuit de refroidissement entoure largement la chambre de moteur (30) du boîtier (11).

12. Unité d'entraînement selon l'une quelconque des revendications précédentes, dans laquelle l'unité d'entraînement présente une partie de boîtier de circuit (21), dans laquelle le circuit électrique (31) est installé, dans laquelle le circuit de refroidissement est conduit à la partie de boîtier de circuit, afin de refroidir le circuit électrique.
